(19) Europäisches Patentamt
European Patent Office
Office européen des brevets

(11) **EP 1 505 297 B1**

(12) **EUROPEAN PATENT SPECIFICATION**

(45) Date of publication and mention of the grant of the patent:
**07.01.2009 Bulletin 2009/02**

(51) Int Cl.:
***F02N 15/02*** *(2006.01)* ***F02N 15/06*** *(2006.01)*

(21) Application number: **04018372.5**

(22) Date of filing: **03.08.2004**

(54) **Starting apparatus for internal combustion engine**

Vorrichtung zum Anlassen einer Brennkraftmaschine

Appareil de démarrage pour moteur à combustion interne

(84) Designated Contracting States:
**DE FR GB IT**

(30) Priority: **07.08.2003 JP 2003288478**

(43) Date of publication of application:
**09.02.2005 Bulletin 2005/06**

(73) Proprietor: **Toyota Jidosha Kabushiki Kaisha Toyota-shi, Aichi-ken, 471-8571 (JP)**

(72) Inventors:
• **Sakai, Kazuhito**
**Toyota-shi,**
**Aichi-ken 471-8571 (JP)**
• **Asada, Toshiaki**
**Toyota-shi,**
**Aichi-ken 471-8571 (JP)**

• **Ezaki, Shuichi**
**Toyota-shi,**
**Aichi-ken 471-8571 (JP)**
• **Ishikawa, Makoto**
**Toyota-shi,**
**Aichi-ken 471-8571 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**EP-A- 0 366 073      US-A- 1 415 080**
**US-A- 4 523 558**

• **PATENT ABSTRACTS OF JAPAN vol. 2003, no. 02, 5 February 2003 (2003-02-05) & JP 2002 285942 A (HONDA MOTOR CO LTD), 3 October 2002 (2002-10-03)**

## Description

### 1. Field of the Invention

The invention relates to a starting apparatus for an internal combustion engine, which transmits rotation from a drive source to a crankshaft via clutch means.

### 2. Description of the Related Art

JP(A) 2001-165022 discloses a starting apparatus for an internal combustion engine, which includes a starter motor as a drive source, and a motor/generator. This starting apparatus is applied to a vehicle which runs using the internal combustion engine and the motor/generator. If the difference in rotational speed between the starter motor and the internal combustion engine is a predetermined value or more, it is determined that there is an abnormality in the rotation transmission path of the starting apparatus and the motor/generator is used as a substitute drive source to start the internal combustion engine. JP(A) 2001-165019, US 1415080 and JP(A) 4-279765 also disclose art related to the invention.

The starting apparatus of the related art, however, can not be applied to a vehicle that does not use a motor/generator as a substitute drive source.

### SUMMARY OF THE INVENTION

Thus, the object of this invention is to provide a starting apparatus capable of starting an internal combustion engine using a drive source even when rotation is unable to be transmitted due to failure of clutch means provided in a rotation transmission path of the starting apparatus.

A first aspect of the invention relates to a starting apparatus for an internal combustion engine, which includes clutch means for selectively allowing or preventing transmission of rotation provided in a rotation transmission path through which rotation is transmitted from a drive source to a crankshaft. The starting apparatus includes a first rotation transmitting member and a second rotation transmitting member. The first rotation transmitting member is provided in the rotation transmission path so as to be movable along a rotational axis and driven by the drive source. The first rotation transmitting member is also provided with a helical gear that is movable along the rotational axis and which receives a thrust force from being driven by the drive source. The second rotation transmitting member is coupled via the clutch means to the first rotation transmitting member and is rotatable on the same axis as the first rotation transmitting member. The starting apparatus is characterised in that the thrust force received by the helical gear is in a direction from the first rotation transmitting member toward the second rotation transmitting member; the first rotation transmitting member and the second rotation transmitting member are either coupled or uncoupled as the first rotation transmitting member moves along the rotational axis; and auxiliary rotation transmitting means is provided for transmitting rotation between the rotation transmitting members bypassing the clutch means when the rotation transmitting members are coupled, and preventing rotation from being transmitted between the rotation transmitting members bypassing the clutch means when the rotation transmitting members are uncoupled.

According to this starting apparatus, when the first rotation transmitting member is driven by the drive source, it rotates on its rotational axis, as well as moves on its rotational axis toward the second rotation transmitting member by the thrust force acting on the helical gears. As long as the clutch means is operating normally, however, the torque necessary to start the engine is transmitted from the first rotation transmitting member to the second rotation transmitting member via the clutch means. In this case, because both of the rotation transmitting members rotate together on the same axis, even if the first rotation transmitting member were to move into contact with the second rotation transmitting member, the auxiliary rotation transmitting means would not need to function as part of the rotation transmission path and no rotation would actually be transmitted via the auxiliary rotation transmitting means. On the other hand, if the clutch means fails such that it is unable to transmit rotation, the first rotation transmitting member is moved into contact with the second rotation transmitting member by the thrust force acting on the helical gears. Because the second rotation transmitting member is either not rotating or is idling at a speed slower than that of the first rotation transmitting member at this time, the two rotation transmitting members come into contact and rotation is transmitted via the auxiliary rotation transmitting means. Therefore, even if the clutch means fails, the internal combustion engine can still by started by transmitting the rotation from the drive source to the crankshaft bypassing the clutch means. Further, after the internal combustion engine is started, the load on the internal combustion engine can be reduced to what it is when the clutch means is operating normally by uncoupling the first rotation transmitting member from the second rotation transmitting member to prevent rotation from being transmitted from the clutch means to the drive source side.

Also in the foregoing starting apparatus, a pair of threaded portions serving as the auxiliary rotation transmitting means may be provided, one on the first rotation transmitting member and the other at a corresponding position on the second rotation transmitting member, which faces the one on the first rotation transmitting member.

Accordingly, if the clutch means fails, the rotation transmitting members can be firmly and reliably coupled together by using the difference in rotation speed between the first rotation transmitting member and the second rotation transmitting member to screw the threaded portions together. On one hand, when the internal combustion engine starts, the second rotation transmitting member is driven by the crankshaft, while on the other hand, when the drive source stops, it no longer inputs rotation to the first rotation transmitting member. Instead, the drive source and the like act as rotational resistance on the first rotation transmitting member. As a result, the second rotation transmitting member rotates relative to the first rotation transmitting member in the direction in which the threaded portions unscrew so they unscrew. Accordingly, rotation is prevented from being transmitted bypassing the clutch means and the clutch means prevents the drive source side acting as a load on the internal combustion engine.

Magnets or friction plates serving as the auxiliary rotation transmitting means may also be provided on opposing surfaces of the first rotation transmitting member and the second rotation transmitting member.

Accordingly, if the clutch means fails, it can be bypassed and rotation can be transmitted between the first rotation transmitting member and the second rotation transmitting member by magnetic force from the magnets or frictional force from the friction plates.

Further, the starting apparatus may also include startup time detecting means for detecting the time that it takes after the first rotation transmitting member starts to be driven by the drive source until the internal combustion engine starts up; and failure determining means for determining that the clutch means has failed when the detection results from the startup time detecting means exceed a predetermined value.

Rotation starts to be transmitted via the auxiliary rotation transmitting means after the rotation transmission path has been established by the auxiliary rotation transmitting means. Therefore, there tends to be a delay in the transmission of rotation when it is transmitted via the auxiliary rotation transmitting means as compared the clutch means. By detecting the time that it takes for the engine to start up and comparing it with the predetermined value, it can therefore be determined whether the rotation is being transmitted via the clutch means or via the auxiliary rotation transmitting means. If it is determined that rotation is being transmitted via the auxiliary rotation transmitting means, it can then be determined that there is a failure in the clutch means.

Moreover, the starting apparatus may also be applied to an internal combustion engine that is mounted in a vehicle provided with stop controlling means for selectively stopping or starting the internal combustion engine in response to the running state of the vehicle. Also, the starting apparatus may further include control prohibiting means for prohibiting stopping of the internal combustion engine by the stop controlling means when the failure determining means has determined that the clutch means has failed.

When it is determined that the clutch means has failed, the frequency with which rotation is transmitted via the auxiliary rotation transmitting means can be reduced by prohibiting stopping of the internal combustion engine by the control prohibiting means. This reduces the demands for strength and durability of the auxiliary rotation transmitting means, which reduces the need for additional auxiliary rotation transmitting means, thereby keeping costs down.

The starting apparatus may further include warning means for generating a predetermined warning when the failure determining means has determined that the clutch means has failed.

Accordingly, the generation of a warning regarding the failure of the one-way clutch urges that measures necessary to restore the one-way clutch to its normal operating state be taken. As a result, it is possible to reduce the likelihood that the failure will be left unattended to and startup will be repeated relying on the auxiliary rotation transmitting means.

The starting apparatus may also include reference startup time setting means for changing the predetermined value in response to a warm-up state of the internal combustion engine.

There is a correlation between the startup time and the warm-up state of the internal combustion engine, that is, between how long it takes to start up the internal combustion engine and how warm or cold the internal combustion engine is. The startup time becomes shorter the warmer the internal combustion engine. Therefore, by changing the predetermined value in response to the warm-up state of the internal combustion engine, the accuracy with which failure of the clutch means is determined can be improved.

BRIEF DESCRIPTION OF THE DRAWINGS

The above-mentioned objects, features, advantages, technical and industrial significance of this invention will be better understood by reading the following detailed description of exemplary embodiments of the invention, when considered in connection with the accompanying drawings, in which:

FIG. 1 is a perspective view of a starting apparatus according to one exemplary embodiment of the invention;
FIG. 2 is a view illustrating a main portion of the starting apparatus shown in FIG. 1;
FIG. 3 is a sectional view of the main portion of the starting apparatus shown in FIG. 2;
FIG. 4 is an enlarged view of section IV in FIG. 3;
FIG. 5 is another sectional view of the main portion of the starting apparatus shown in FIG. 2;
FIG. 6 is an enlarged view of section VI in FIG. 5;
FIG. 7 is a flowchart illustrating a failure diagnostic routine executed by an ECU shown in FIG. 1;
FIG. 8 is a view of an example of the rotation state of the engine during the starting time in FIG. 7; and
FIG. 9 is a sectional view of a modified example of auxiliary rotation transmitting means shown in FIG. 2.

## DETAILED DESCRIPTION OF THE PREFERRED EMBODIMENTS

In the following description and the accompanying drawings, the present invention will be described in more detail in terms of exemplary embodiments.

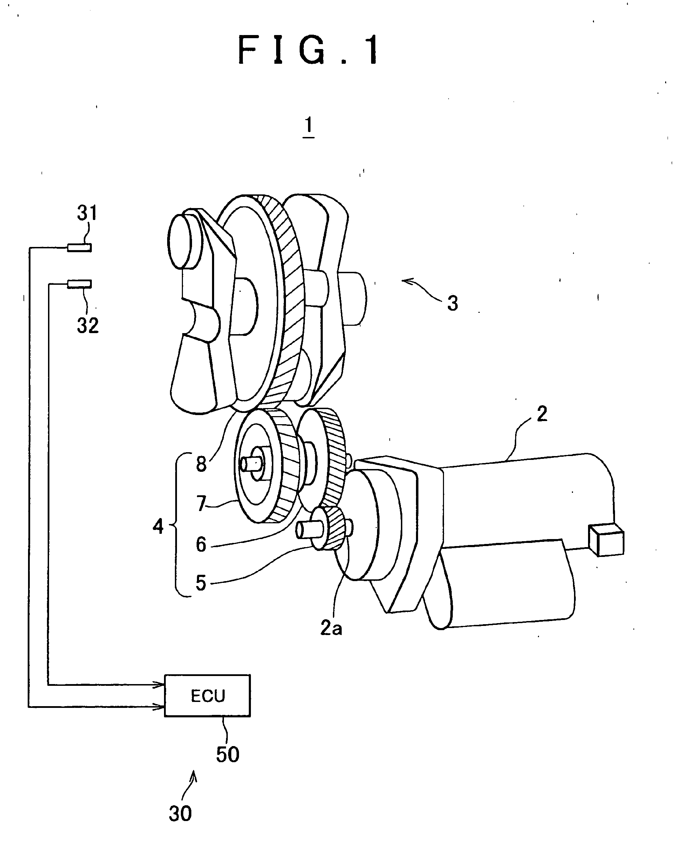

FIG. 1 shows one form of the invention relating to a starting apparatus for an internal combustion engine (hereinafter simply referred to as "engine") used as a power source for driving a vehicle. Although not shown, the engine is a reciprocating type engine that converts reciprocal motion of a piston to rotary motion. A starting apparatus 1 shown in FIG. 1 includes a starter motor 2 and a gear train 4 which transmits the rotation of an output shaft 2a of the starter motor 2 to a crankshaft 3 of the engine. The gear train 4 includes a starter gear 5, a driven gear 6 which serves as a first rotation transmitting member that is meshed with the starter gear 5, an intermediate gear 7 which serves as a second rotation transmitting member that is provided along the same axis as the driven gear 6, and a crank gear 8 that is meshed with the intermediate gear 7. These gears 5, 6, 7, and 8 are all helical gears, which are cylindrical gears that have tooth traces which are cut obliquely with respect to the axis of the gear so as to form a spiral helix shape. These gears enable rotation to be transmitted smoothly and quietly. The gear ratios between the starter gear 5 and the driven gear 6, and the intermediate gear 7 and the crank gear 8 are set so that there is a gear reduction from the starter motor 2 side to the crankshaft 3 side. The rotation speed from the starter motor 2 thus decreases progressively as it is transmitted to the crankshaft 3.

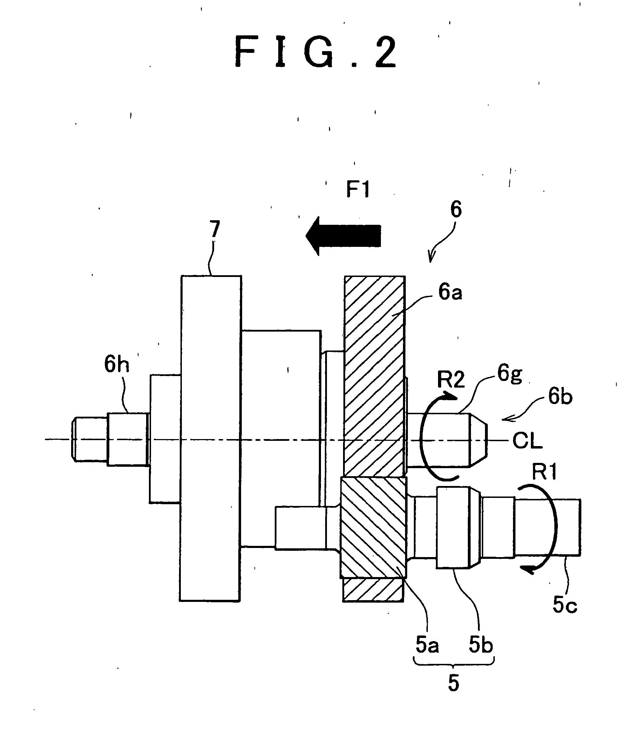

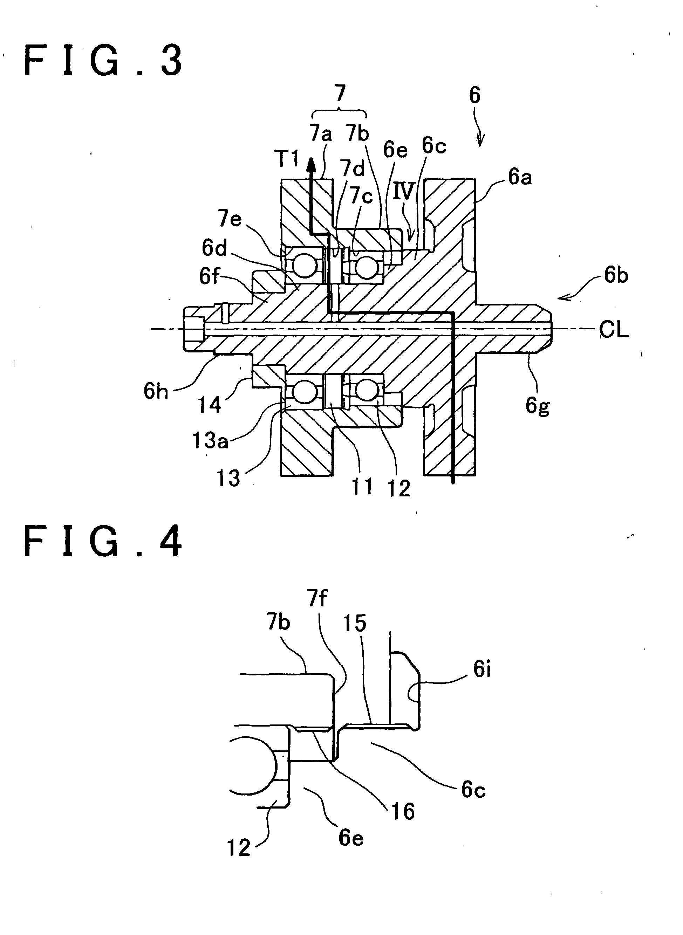

Referring to FIG. 2, a tooth portion 5a and a starter gear shaft 5b are provided on the starter gear 5 so that they can rotate together as a unit. An end portion 5c of the starter gear shaft 5b is connected to an output shaft 2a (FIG. 1) of the starter motor 2. A tooth portion 6a and a driven gear shaft 6b are provided on the driven gear 6 so that they can rotate together as a unit. Referring to FIG. 3, rotation transmitting portions 6c and 6d, a stopper portion 6e, a retainer portion 6f, and support portions 6g and 6h are all provided on the same axis on the driven gear shaft 6b. The driven gear shaft 6b is arranged in parallel with the starter gear shaft 5b (FIG. 2) and is supported by the support portions 6g and 6h so as to be able to both rotate and move along its rotational axis CL. Returning now to FIG. 2, the tooth traces of the tooth portions 5a and 6a of the starter gear 5 and the driven gear 6 are cut so that a thrust force in the direction toward the intermediate gear 7 (i.e., in the direction of arrow F1 in the drawing) acts on the driven gear 6 as the starter gear 5b rotates (in the direction of arrow R1 in the drawing) when starting the engine.

Referring again to FIG. 3, a tooth portion 7a and an intermediate gear shaft 7b are provided on the intermediate gear 7 so that they can rotate together as a unit. A one-way clutch 11 that serves as the clutch means, and bearings 12 and 13 arranged so as to sandwich the one-way clutch 11 in the axial direction of the rotational axis CL are fit with clearance against inner peripheral surfaces 7c, 7d, and 7e of the intermediate gear shaft 7b. The one-way clutch 11 and the bearings 12 and 13 are fitted onto the rotation transmitting portion 6d from the support portion 6h side while fitted together with the intermediate gear shaft 7b. A retainer 14 is mounted on the retainer portion 6f so that it contacts an end face 13a of the bearing 13. The retainer 14 prevents the one-way clutch 11 and the bearings 12 and 13 from moving in the axial direction by sandwiching them against the stopper portion 6e.

The one-way clutch 11 allows rotation to be transmitted from the driven gear shaft 6b to the intermediate gear shaft 7b and prevents it from being transmitted from the intermediate gear shaft 7b to the driven gear shaft 6b. Therefore, in the starting apparatus 1 shown in FIG. 1, when starting the engine, the rotation of the output shaft 2a of the starter motor 2 is transmitted in turn from the starter gear 5 to the driven gear 6, then to the intermediate gear 7, and finally to the crank gear 8 so as to drive the crankshaft 3. Also, when the starter motor 2 is stopped after the engine has started, the crank gear 8 and the intermediate gear 7 are driven by the crankshaft 3, but the one-way clutch 11 simply freewheels so rotation is not transmitted back to the driven gear shaft 6b (FIG. 3). As a result, the driven gear 6 and the starter gear 5 do not rotate even though the intermediate gear 7 is in constant mesh with the crank gear 8.

As shown in detail in FIG. 4, a pair of threaded portions 15 and 16 serving as the auxiliary rotation transmitting means is provided, one on the rotation transmitting portion 6c of the driven gear 6 and the other at a corresponding position on the intermediate gear shaft 7b of the intermediate gear 7, which faces the one on the rotation transmitting portion 6c. The winding direction of the threaded portions 15 and 16 is such that the threaded portion 15 screws into the threaded portion 16 as the driven gear shaft 6b rotates (in the direction of arrow R2 in FIG. 2) when starting the engine.

In the starter gear 5, the driven gear 6, and the intermediate gear 7 in FIGS. 2 and 3, the tooth portions 5a, 6a, and 7a can each rotate together with their respective shafts 5b, 6b, and 7b. Therefore, the tooth portions 5a, 6a, and 7a may be formed integrally with their respective shafts 5b, 6b, and 7b, or the tooth portions 5a, 7a, and 7a may be made in a separate process and then fixed to the outer periphery of their respective shafts 5b, 6b, and 7b using a method such as shrink fitting or press fitting.

Next, the operation of the driven gear 6 and the intermediate gear 7 will be described with reference to FIGS. 2 to 6. The starter gear 5 is driven in the direction of arrow R1, as shown in FIG. 2, when starting the engine. Accordingly, because the tooth portions 5a and 6a are in mesh with one another, the driven gear 6 is rotated in the direction of arrow R2 while receiving thrust force in the direction of arrow FI. When the one-way clutch 11 shown in FIG. 3 is operating normally, it locks the driven gear shaft 6b and the intermediate gear shaft 7b together so that they rotate as a single unit. As a result, the threaded portions 15 and 16 in FIG. 4 do not rotate relative to one another in the circumferential direction. Because the threaded portion 15 does not screw into the threaded portion 16, rotation is transmitted through a rotation transmission path T1 via the one-way clutch 11 in FIG. 3.

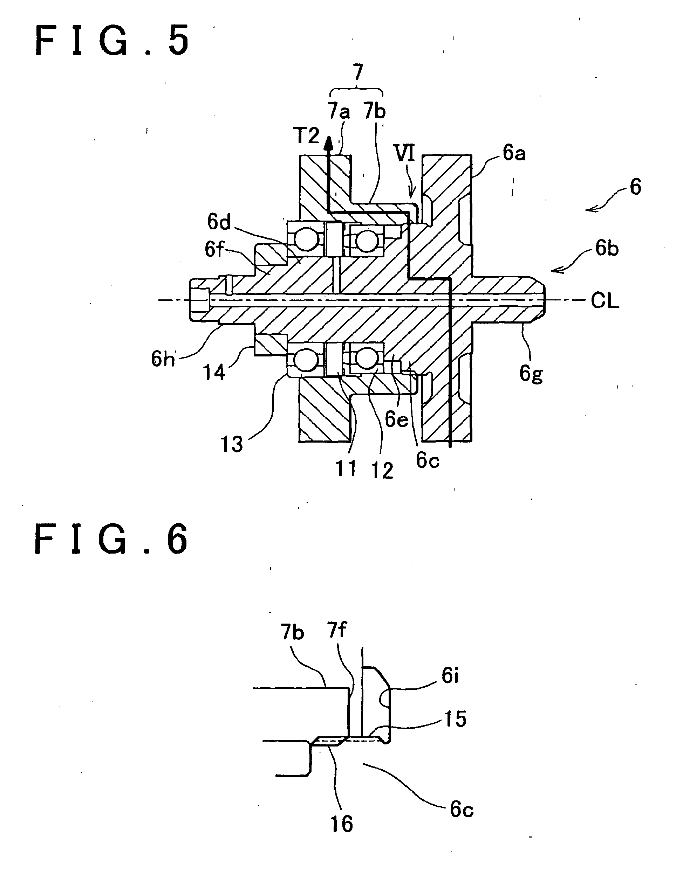

If the one-way clutch 11 fails, the driven gear shaft 6b and the intermediate gear shaft 7b are no longer able to rotate together so the threaded portions 15 and 16 start to rotate relative to one another in the circumferential direction. As a result, the thrust force acting in the direction of arrow F1 (FIG. 2) forces the driven gear shaft 6b toward the intermediate gear shaft 7b. When the driven gear shaft 6b comes into contact with the intermediate gear shaft 7b, the relative rotation between them causes the threaded portion 15 to screw into the threaded portion 16, as shown in FIG. 6. The threaded portion 15 screws into the threaded portion 16 until an end surface 7f of the intermediate gear shaft 7b contacts a wall portion 6i of the driven gear 6 that is perpendicular to the rotational axis CL. This contact between the threaded portions 15 and 16 establishes a rotation transmission path T2 between the driven gear shaft 6b and the intermediate gear shaft 7b which bypasses the one-way clutch 11, as shown in FIG. 5. This rotation transmission path T2 enables rotation to be transmitted from the driven gear shaft 6b to the intermediate gear shaft 7b.

After the engine starts, the intermediate gear shaft 7b is driven by the crank shaft 3. In this case, the intermediate gear shaft 7b is driven in the direction in which the threaded portions 15 and 16 unscrew, while a resistance force from the starter motor 2 is applied to the driven shaft 6b. As a result, the threaded portions 15 and 16 unscrew, and in doing so, move away from one another. This interrupts the rotation transmission path T2 which bypasses the one-way clutch 11, so rotation is no longer able be transmitted from the driven shaft 6b to the intermediate gear shaft 7b.

The thread lengths of the threaded portions 15 and 16 will be described next. The time that it takes for the threaded portion 15 to screw into the threaded portion16 changes depending on the thread lengths of the threaded portions 15 and 16. For example, if the thread lengths of the threaded portions 15 and 16 are extremely short, the driven shaft 6b and the intermediate gear shaft 7b might become coupled together by the threaded portions 15 and 16 even when the one-way clutch 11 is operating normally. The threaded portions 15 and 16 preferably transmit rotation by coupling the driven shaft 6b and the intermediate gear shaft 7b together only when the one-way clutch 11 has failed. In order to satisfy this condition, the thread lengths of the threaded portions 15 and 16 may be set such that i) the startup time required for starting up the engine when the one-way clutch 11 is operating normally (hereinafter, simply referred to as "normal startup time") $\tau u$ and ii) the

idling time $\tau b$ of the driven gear 6 when the one-way clutch 11 has failed satisfy the following expression.

### Expression 1

$$\tau b > \tau u\_max - \tau u\_min$$

where the normal maximum startup time $\tau u\_max$ and the normal minimum startup time $\tau u\_min$ are maximum and minimum values, respectively, from among a variety of normal startup times $\tau u$.

Expression 1 can also be expressed as follows.

### Expression 2

$$\tau b + \tau u\_min > \tau u\_max$$

The left side of expression 2 expresses the minimum startup time when the threaded portion 15 is screwed into the threaded portion 16 after the one-way clutch 11 has failed and the driven gear 6 was idling. The right side of the expression expresses the maximum startup time when the one-way clutch 11 is operating normally. Therefore, when the one-way clutch 11 is operating normally, rotation is transmitted via the one-way clutch 11, not via the threaded portions 15 and 16.

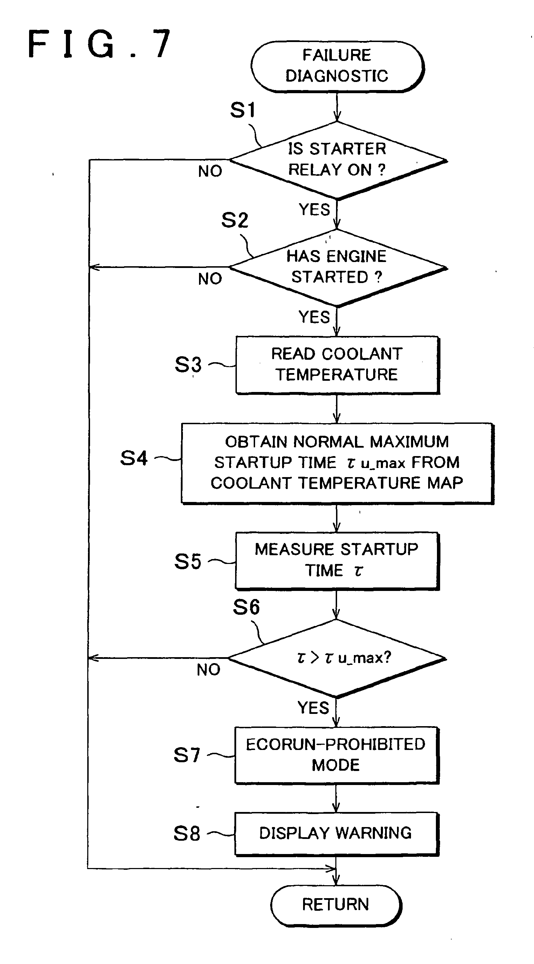

Referring back to FIG. 1, a failure diagnostic apparatus 30 for diagnosing a failure in the one-way clutch 11 is provided in the starting apparatus 1. This failure diagnostic apparatus 30 includes a rotation sensor 31 that outputs a signal indicative of rotational speed, a coolant temperature sensor 32 that outputs a signal indicative of the coolant temperature, and an engine control unit (ECU) 50. The ECU 50 is provided as a computer that references these signals output from the rotation sensor 31 and the coolant temperature sensor 32 and the like, and controls the operating state (such as the fuel injection state) of the engine according to a program stored in ROM. The ECU 50 serves as stop controlling means for automatically stopping or starting the engine in response to the running state of the vehicle equipped with the engine. In addition, the ECU 50 also serves as startup time detecting means, failure determining means, control prohibiting means, warning means, and reference starting time setting means of this invention by repeatedly executing the failure diagnostic routine shown in FIG. 7 at a constant frequency. Known procedures may be used for the control to stop and start the engine, and so will therefore not be described here.

The failure diagnostic routine is as follows. In the failure diagnostic routine, the ECU 50 first determines in step S 1 whether or not a starter relay is on, i.e., whether or not the starter motor 2 has started rotating. If the ECU 50 determines that the starter motor 2 has not started rotating, this cycle of the routine ends. If, on the other hand, the ECU 50 determines that the starter motor 2 has started rotating, the process proceeds on to step S2. In step S2, the crankshaft 3 is driven by the starter motor 2 and it is determined whether the engine has started. The engine is determined to have started when the engine speed detected by the rotation sensor 31 is greater than zero, for example. If it is determined that the engine has not started, this cycle of the routine ends. If, on the other hand, it is determined that the engine has started, the process proceeds on to step S3, in which the coolant temperature is read from a signal output from the coolant temperature sensor 32. Next in step S4, the normal maximum startup time $\tau u\_max$ corresponding to the coolant temperature is obtained from a map stored in ROM of the ECU 50 that was obtained through experimentation in advance.

In step S5, the startup time $\tau$ from when the starter relay is turned on until the engine speed becomes greater than zero is measured, and in step S6, it is determined whether the startup time $\tau$ measured in step S5 is greater than the normal maximum startup time $\tau u\_max$ obtained in step S4. If the startup time $\tau$ is equal to, or less than, the normal maximum startup time $\tau u\_max$, this cycle of the routine ends. If, however, the startup time $\tau$ is greater than the normal maximum startup time $\tau u\_max$, it is determined that the one-way clutch 11 has failed and the process proceeds on to step S7. In step S7, the engine is switched to a so-called ecorun-prohibited mode that prohibits the engine from being stopped in response to the running state of the vehicle. The process then proceeds on to step S8 where, for example, a warning lamp on an instrument panel in the vehicle is illuminated as a predetermined warning display. The routine then ends.

According to the foregoing exemplary embodiment, even if the one-way clutch 11 fails, the engine can still be started by the starter motor 2 because the threaded portions 15 and 16 screw together so as to couple the driven shaft 6b and the intermediate gear shaft 7b together. Failure of the one-way clutch 11 can be determined by comparing the startup time $\tau$ with the normal maximum startup time $\tau u$-max. When it has been determined that there is a failure in the one-way clutch 11, the engine is switched to the ecorun-prohibited mode which prevents it from being repeatedly stopped and started. This reduces the frequency with which the threaded portions 15 and 16 are used to transmit rotation. As a result, a secondary failure or further failure in the starting apparatus 1 can be prevented. Moreover, the driver is alerted to the failure of the one-way clutch 11 and therefore prompted to take the necessary measures to restore the one-way clutch 11 to its normal operating state.

In the failure diagnostic routine shown in FIG. 7 according to the foregoing exemplary embodiment, the ECU 50 serves as the reference startup time setting means by executing step S4, the startup time detecting means by executing step S5, the failure determining means by executing step S6, the control prohibiting means by executing step S7, and the warning means by executing step S8.

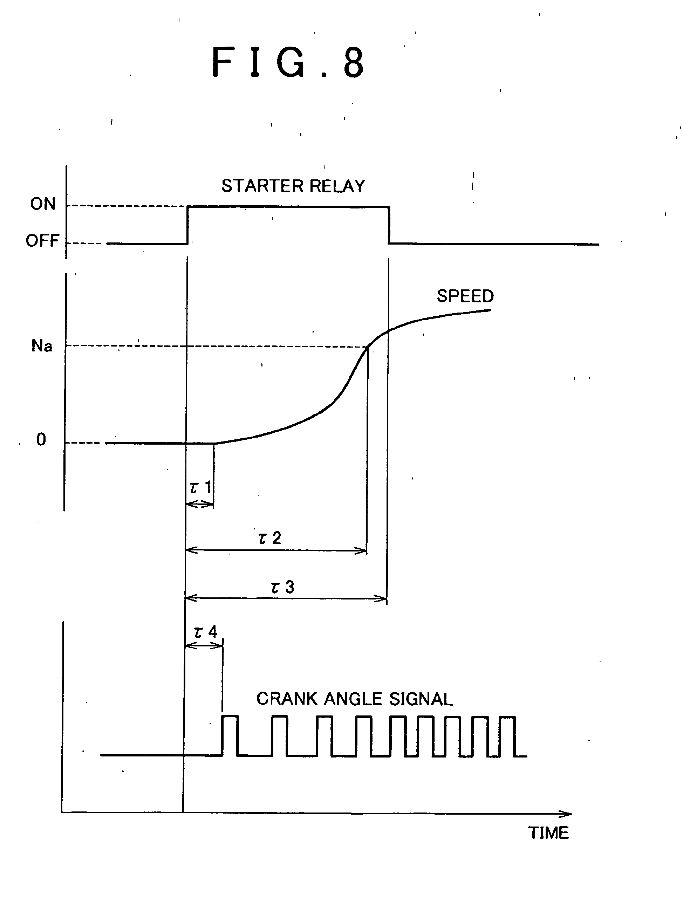

The invention is not limited to the aforementioned embodiments, but can be implemented with further variations and modifications as necessary. For example, as shown in FIG. 8, the startup time $\tau$ measured in step S5 is not limited to being time $\tau1$, which is until the engine speed becomes greater than zero. Alternatively, it may be time $\tau2$, which is until the engine speed exceeds a predetermined speed Na, or it may be time $\tau3$, which is until the starter relay is turned off. It may also be time $\tau4$, which is until the crank angle signal from the crank angle sensor starts to be input.

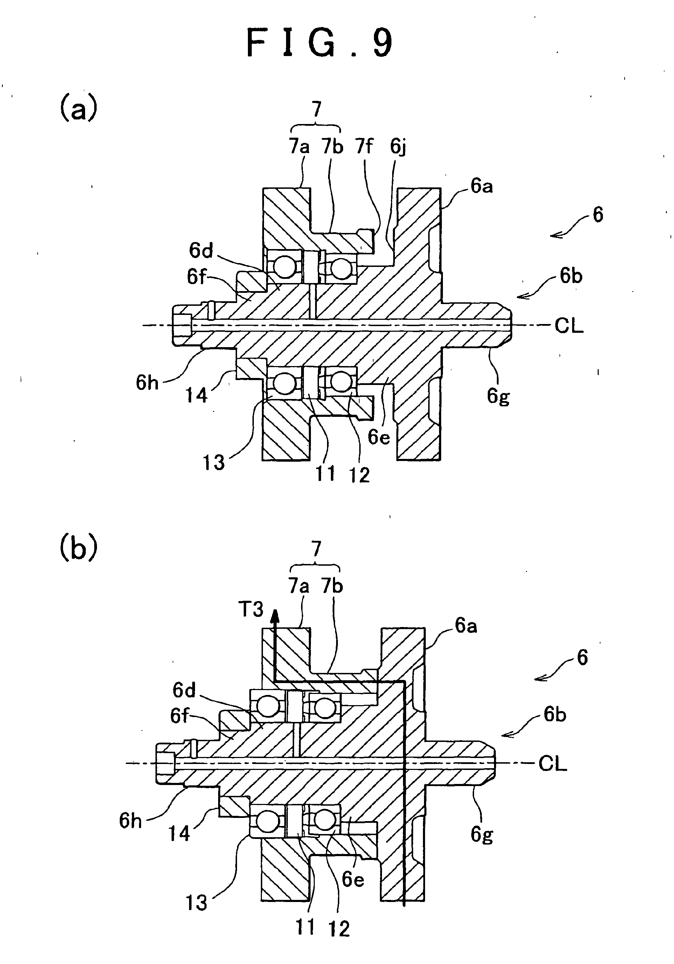

Furthermore in the foregoing exemplary embodiments, the threaded portions 15 and 16 are provided as the auxiliary rotation transmitting means, but the invention is not limited to this. For example, magnets may be provided on opposing surfaces 6j and 7f of the driven gear shaft 6b and the intermediate gear shaft 7b, as shown in FIG. 9(a). In this case, a rotation transmission path T3 that bypasses the one-way clutch 11 is established by means of magnetic force, as shown in FIG. 9 (b). Alternatively, friction plates may be provided on the opposing surfaces 6j and 7f of the driven gear shaft 6b and the intermediate gear shaft 7b. In this case, the rotation transmission path T3 that bypasses the one-way clutch 11 is established by means of frictional force generated at the surfaces 6j and 7f as the thrust force acts on the driven gear 6. This rotation transmission path T3 enables rotation to be transmitted from the driven shaft 6b to the intermediate shaft 7b.

According to the invention, the starting apparatus 1 includes the starter motor 2 and the gear train 4 that transmits the rotation of the starter motor 2 to the crankshaft 3 of the engine. The gear train 4 includes the starter gear 5, the driven gear 6 that is meshed with the starter gear 5, and the intermediate gear 7 that is provided on the same axis as the driven gear 6. The driven gear 6 includes the tooth portion 6a made of helical teeth and the driven gear shaft 6b which is supported so as to be able to move along the rotational axis CL. The intermediate gear 7 includes the intermediate gear shaft 7b. The pair of threaded portions 15 and 16 serving as the auxiliary rotation transmitting means is provided, one on the rotation transmitting portion 6c of the driven gear shaft 6b and the other at a corresponding position on the intermediate gear shaft 7b of the intermediate gear 7, which faces the one on the rotation transmitting portion 6c.

According to the invention as described above, if the rotation is unable to be transmitted via the clutch means, the thrust force acting on the helical gears is used to move the first rotation transmitting member toward the second rotation transmitting member so that it becomes coupled to that second rotation transmitting member. The rotation can then transmitted from the first rotation transmitting member to the second rotation transmitting member via the auxiliary rotation transmitting means. As a result, even if the clutch means fails, the internal combustion engine can still by started by transmitting the rotation from the drive source to the crankshaft bypassing the clutch means. Further, after the internal combustion engine is started, the load on the internal combustion engine can be reduced to what it is when the clutch means is operating normally by uncoupling the first rotation transmitting member from the second rotation transmitting member to prevent rotation from being transmitted from the clutch means to the drive source side.

**Claims**

1. A starting apparatus for an internal combustion engine, which includes clutch means (11) for selectively allowing or preventing transmission of rotation provided in a rotation transmission path through which rotation is transmitted from a drive source to a crankshaft (3), the starting apparatus **characterised by** comprising:

a first rotation transmitting member (6), which is provided in the rotation transmission path so as to be movable along a rotational axis (CL) and driven by the drive source, and which is provided with a helical gear (6a) that is movable along the rotational axis (CL), that rotates together with the first rotation transmitting member (6) as a unit and that receives a thrust force from being driven by a helical starter gear (5) of the drive source; and
a second rotation transmitting member (7) which is coupled via the clutch means (11) to the first rotation transmitting member (6) and that is rotatable on the same axis (CL) as the first rotation transmitting member (6), wherein
the thrust force received by the helical gear (6a) is in a direction from the first rotation transmitting member (6) toward the second rotation transmitting member (7) as the starter gear (5) rotates when starting the engine;
the first rotation transmitting member (6) and the second rotation transmitting member (7) are either coupled or uncoupled as the first rotation transmitting member (6) moves on the rotational axis (CL);
and auxiliary rotation transmitting means is provided for transmitting rotation between the rotation transmitting members (6, 7), thereby bypassing the clutch means (11), when the rotation transmitting members (6, 7) are coupled, and preventing rotation from being transmitted between the rotation transmitting members (6, 7), thereby preventing bypassing the clutch means (11), when the rotation transmitting members (6, 7) are uncoupled.

2. The starting apparatus according to claim 1, **characterised in that** a pair of threaded portions (15, 16) serving as the auxiliary rotation transmitting means is provided, one on the first rotation transmitting member (6) and the other at a corresponding position on the second rotation transmitting member (7), which faces the one on the first rotation transmitting member (6).

3. The starting apparatus according to claim 1, **characterised in that** magnets serving as the auxiliary rotation transmitting means are provided on opposing surfaces (6j, 7f) of the first rotation transmitting member (6) and the second rotation transmitting member (7).

4. The starting apparatus according to claim 1, **characterised in that** friction plates serving as the auxiliary rotation transmitting means are provided on opposing surfaces (6j, 7f) of the first rotation transmitting member (6) and the second rotation transmitting member (7).

5. The starting apparatus according to any one of claims 1 to 4, **characterised by** further comprising:

startup time detecting means (S5) for detecting the time that it takes after the first rotation transmitting member (6) starts to be driven by the drive source until the internal combustion engine starts up; and
failure determining means for determining that the clutch means (11) has failed when the detection results from the startup time detecting means (S5) exceed a predetermined value.

6. The starting apparatus according to claim 5, wherein the internal combustion engine is mounted in a vehicle provided with stop controlling means for selectively stopping or starting the internal combustion engine in response to the running state of the vehicle, the starting apparatus **characterised by** further comprising:

control prohibiting means (S7) for prohibiting stopping of the internal combustion engine by the stop controlling means when the failure determining means (S6) has determined that the clutch means (11) has failed.

7. The starting apparatus according to claim 5 or 6, **characterised by** further comprising:

warning means (S8) for generating a predetermined warning when the failure determining means (S6) has determined that the clutch means (11) has failed.

8. The starting apparatus according to any one of claims 5 to 7, **characterised by** further comprising:

reference startup time setting means (S4) for changing the predetermined value in response to a warm-up state of the internal combustion engine.

## Patentansprüche

1. Startvorrichtung für einen Verbrennungsmotor, die ein Kupplungsmittel (11) aufweist zum selektiven Zulassen oder Verhindern der Übertragung einer Drehung, das in einem Drehungsübertragungsweg vorgesehen ist, auf dem eine Drehung von einer Antriebsquelle auf eine Kurbelwelle (3) übertragen wird, wobei die Startvorrichtung **dadurch gekennzeichnet ist, dass** sie aufweist:

    ein erstes Drehungsübertragungselement (6), das so im Drehungsübertragungsweg vorgesehen ist, dass es sich entlang einer Drehachse (CL) bewegen kann und von der Antriebsquelle angetrieben wird, und das mit einem Schrägverzahnungsrad (6a) versehen ist, das sich entlang der Drehachse (CL) bewegen kann und das sich zusammen mit dem ersten Drehungsübertragungselement (6) als Einheit dreht und das **dadurch**, dass es von einem Starter-Schrägverzahnungsrad (5) der Antriebsquelle angetrieben wird, eine Schubkraft empfängt; und
    ein zweites Drehungsübertragungselement (7), das über das Kupplungsmittel (11) mit dem ersten Drehungsübertragungselement (6) verkuppelt wird und das sich auf der gleichen Achse (CL) wie das erste Drehungsübertragungselement (6) drehen kann, wobei
    die Schubkraft, die vom Schrägverzahnungsrad (6a) empfangen wird, vom ersten Drehungsübertragungselement (6) zum zweiten Drehungsübertragungselement (7) gerichtet ist, wenn das Starterrad (5) sich beim Starten des Motors dreht;
    das erste Drehungsübertragungselement (6) und das zweite Drehungsübertragungselement (7) entweder verkuppelt oder gelöst sind, wenn das erste Drehungsübertragungselement (6) sich auf der Drehachse (CL) bewegt;
    und ein Hilfs-Drehungsübertragungsmittel, das vorgesehen ist, um eine Drehung zwischen den Drehungsübertragungselementen (6, 7) zu übertragen, wodurch das Kupplungsmittel (11) umgangen wird, wenn die Drehungsübertragungselemente (6, 7) verkuppelt sind, und um eine Übertragung der Drehung zwischen den Drehungsübertragungselementen (6, 7) zu verhindern, wodurch eine Umgehung des Kupplungsmittels (11) verhindert wird, wenn die Drehungsübertragungselemente (6, 7) gelöst sind.

2. Startvorrichtung nach Anspruch 1, **dadurch gekennzeichnet, dass** ein Paar Gewindeabschnitte (15, 16), die als das Hilfs-Drehungsübertragungsmittel dienen, vorgesehen sind, einer am ersten Drehungsübertragungselement (6) und der andere an einem entsprechenden Abschnitt am zweiten Drehungsübertragungselement (7), der auf den am ersten Drehungsübertragungselement (6) gerichtet ist.

3. Startvorrichtung nach Anspruch 1, **dadurch gekennzeichnet, dass** Magnete, die als Hilfs-Drehungsübertragungsmittel dienen, auf einander gegenüber liegenden Oberflächen (6j, 7f) des ersten Drehungsübertragungselements (6) und des zweiten Drehungsübertragungselements (7) vorgesehen sind.

4. Startvorrichtung nach Anspruch 1, **dadurch gekennzeichnet, dass** Reibplatten, die als das Hilfs-Drehungsübertragungsmittel dienen, auf einander gegenüber liegenden Oberflächen (6j, 7f) des ersten Drehungsübertragungselements (6) und des zweiten Drehungsübertragungselements (7) vorgesehen sind.

5. Startvorrichtung nach einem der Ansprüche 1 bis 4, **dadurch gekennzeichnet, dass** sie ferner aufweist:

    ein Starzeit-Erfassungsmittel (S5) zum Erfassen der Zeit, die vergeht, bis der Verbrennungsmotor nach dem Antriebsstart des ersten Drehungsübertragungselements (6) durch die Antriebsquelle startet; und
    ein Ausfallbestimmungsmittel zum Bestimmen, dass das Kupplungsmittel ausgefallen ist, wenn die Erfassungsergebnisse vom Startzeit-Erfassungsmittel (S5) einen vorgegebenen Wert überschreiten.

6. Startvorrichtung nach Anspruch 5, wobei der Verbrennungsmotor in einem Fahrzeug eingebaut ist, das mit einem Stoppsteuerungsmittel versehen ist, um den Verbrennungsmotor ansprechend auf den Betriebszustand des Fahrzeugs selektiv zu stoppen oder zu starten, wobei die Startvorrichtung **dadurch gekennzeichnet ist, dass** sie ferner aufweist:

    ein Steuerungsverhinderungsmittel (S7) zum Verhindern eines Stoppens des Verbrennungsmotors durch das Stoppsteuermittel, wenn das Ausfallbestimmungsmittel (S6) bestimmt hat, dass das Kupplungsmittel (11) ausgefallen ist.

7. Startvorrichtung nach Anspruch 5 oder 6, **dadurch gekennzeichnet, dass** sie ferner aufweist:

ein Warnmittel (S8) zum Erzeugen einer vorgegebenen Warnung, wenn das Ausfallbestimmungsmittel (S6) bestimmt hat, dass das Kupplungsmittel (11) ausgefallen ist.

8. Startvorrichtung nach einem der Ansprüche 5 bis 7, **dadurch gekennzeichnet, dass** sie ferner aufweist:

ein Bezugsstartzeit-Einstellmittel (S4) zum Ändern des vorgegebenen Werts ansprechend auf einen Aufwärmzustand des Verbrennungsmotors.

**Revendications**

1. Appareil de démarrage pour un moteur à combustion interne, qui inclut un moyen d'embrayage (11) pour autoriser ou empêcher, de manière sélective, la transmission de rotation pourvu dans un chemin de transmission de rotation à travers lequel la rotation est transmise d'une source d'entraînement à un vilebrequin (3), l'appareil de démarrage est **caractérisé par** le fait de comprendre:

un premier organe de transmission de rotation (6), qui est pourvu dans le chemin de transmission de rotation de sorte à être mobile le long d'un axe de rotation (CL) et entraîné par la source d'entraînement, et qui est doté d'un engrenage hélicoïdal (6a) qui est mobile le long de l'axe de rotation (CL), qui tourne en même temps que le premier organe de transmission de rotation (6) comme une unité et qui reçoit une force de poussée par le fait d'être entraîné par une couronne dentée hélicoïdale (5) de volant moteur de la source d'entraînement; et
un deuxième organe de transmission de rotation (7) qui est couplé par le biais du moyen d'embrayage (11) au premier organe de transmission de rotation (6) et qui est rotatif sur le même axe (CL) que le premier organe de transmission de rotation (6), où
la force de poussée reçue par l'engrenage hélicoïdal (6a) se trouve dans une direction du premier organe de transmission de rotation (6) vers le deuxième organe de transmission de rotation (7) à mesure que la couronne dentée (5) de volant moteur tourne lors du démarrage du moteur;
le premier organe de transmission de rotation (6) et le deuxième organe de transmission de rotation (7) sont soit couplés ou découplés à mesure que le premier organe de transmission de rotation (6) se déplace sur l'axe de rotation (CL); et un moyen de transmission de rotation auxiliaire est pourvu pour la transmission de rotation entre les organes de transmission de rotation (6, 7), contournant ainsi le moyen d'embrayage (11), lorsque les organes de transmission de rotation (6, 7) sont couplés, et empêchant la transmission de rotation entre les organes de transmission de rotation (6, 7), empêchant ainsi un contournement du moyen d'embrayage (11), lorsque les organes de transmission de rotation (6, 7) sont découplés.

2. Appareil de démarrage selon la revendication 1, **caractérisé en ce qu'**une paire de portions filetées (15, 16) faisant office de moyen de transmission de rotation auxiliaire est prévue, l'une sur le premier organe de transmission de rotation (6) et l'autre à une position correspondante sur le deuxième organe de transmission de rotation (7), qui fait face à celle sur le premier organe de transmission de rotation (6).

3. Appareil de démarrage selon la revendication 1, **caractérisé en que** des aimants faisant office de moyen de transmission de rotation auxiliaire sont pourvus sur des surfaces opposées (6j, 7f) du premier organe de transmission de rotation (6) et du deuxième organe de transmission de rotation (7).

4. Appareil de démarrage selon la revendication 1, **caractérisé en ce que** des plaques de frottement faisant office de moyen de transmission de rotation auxiliaire sont pourvues sur des surfaces opposées (6j, 7f) du premier organe de transmission de rotation (6) et du deuxième organe de transmission de rotation (7).

5. Appareil de démarrage selon l'une quelconque des revendications 1 à 4, **caractérisé par** le fait de comprendre en outre:

un moyen de détection du temps de démarrage (S5) pour détecter le temps nécessaire entre le début de l'entraînement du premier organe de transmission de rotation (6) par la source d'entraînement jusqu'au démarrage du moteur à combustion interne; et
un moyen de détermination de défaillance pour déterminer que le moyen d'embrayage (11) a une défaillance lorsque les résultats de détection à partir du moyen de détection du temps de démarrage (S5) dépassent une valeur prédéterminée.

6. Appareil de démarrage selon la revendication 5, dans lequel le moteur à combustion interne est monté dans un véhicule doté d'un moyen de commande d'arrêt pour arrêter ou démarrer de manière sélective le moteur à combustion interne en réponse à l'état de marche du véhicule, l'appareil de démarrage est **caractérisé par** le fait de comprendre en outre:

un moyen d'interdiction de commande (S7) pour interdire l'arrêt du moteur à combustion interne par le moyen de commande d'arrêt lorsque le moyen de détermination de défaillance (S6) détermine que le moyen d'embrayage (11) a une défaillance.

7. Appareil de démarrage selon la revendication 5 ou 6, **caractérisé par** le fait de comprendre en outre:

un moyen d'avertissement (S8) pour générer une alerte prédéterminée lorsque le moyen de détermination de défaillance (S6) détermine que le moyen d'embrayage (11) a une défaillance.

8. Appareil de démarrage selon l'une quelconque des revendications 5 à 7, **caractérisé par** le fait de comprendre en outre:

un moyen d'établissement de temps de démarrage de référence (S4) pour changer la valeur prédéterminée en réponse à un état de réchauffage du moteur à combustion interne.

# F I G . 1

# F I G . 2

FIG.3

FIG.4

EP 1 505 297 B1

F I G . 5

F I G . 6

14

# FIG.7

```
        ┌─────────────┐
        │   FAILURE   │
        │ DIAGNOSTIC  │
        └─────────────┘
               │
    S1         ▼
         ╱───────────────╲
    NO  ╱   IS STARTER    ╲
  ◄─────    RELAY ON ?    
        ╲                ╱
         ╲──────────────╱
               │ YES
    S2         ▼
         ╱───────────────╲
    NO  ╱   HAS ENGINE    ╲
  ◄─────    STARTED ?     
        ╲                ╱
         ╲──────────────╱
               │ YES
               ▼
        ┌─────────────┐
  S3    │READ COOLANT │
        │ TEMPERATURE │
        └─────────────┘
               │
               ▼
      ┌───────────────────┐
      │OBTAIN NORMAL       │
  S4  │MAXIMUM STARTUP     │
      │TIME τ u_max FROM   │
      │COOLANT TEMPERATURE │
      │MAP                 │
      └───────────────────┘
               │
               ▼
        ┌─────────────┐
  S5    │MEASURE      │
        │STARTUP TIME τ│
        └─────────────┘
               │
    S6         ▼
         ╱───────────────╲
    NO  ╱                 ╲
  ◄─────   τ > τ u_max?   
        ╲                ╱
         ╲──────────────╱
               │ YES
               ▼
        ┌─────────────┐
  S7    │ECORUN-      │
        │PROHIBITED   │
        │MODE         │
        └─────────────┘
               │
               ▼
        ┌─────────────┐
  S8    │DISPLAY      │
        │WARNING      │
        └─────────────┘
               │
               ▼
        ┌─────────────┐
        │   RETURN    │
        └─────────────┘
```

# F I G . 8

# F I G . 9

(a)

(b)

**EP 1 505 297 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001165022 A
- JP 2001165019 A
- US 1415080 A
- JP 4279765 A